## Europäisches Patentamt

## European Patent Office

## Office européen des brevets

(11) Veröffentlichungsnummer: **0 091 620**
**B1**

(12) **EUROPÄISCHE PATENTSCHRIFT**

(51) Int. Cl. ⁵: **H 02 B 1/26, H 02 G 3/08**

(45) Veröffentlichungstag der Patentschrifft:
21.03.90

(21) Anmeldenummer: **83103208.1**

(22) Anmeldetag: **31.03.83**

(54) Vorrichtung zum schraubenlosen Verbinden von zwei Gehäuseteilen eines Installationsgerätes.

(30) Priorität: **10.04.82 DE 3213404**

(43) Veröffentlichungstag der Anmeldung:
**19.10.83 Patentblatt 83/42**

(45) Bekanntmachung des Hinweises auf die Patenterteilung:
**21.03.90 Patentblatt 90/12**

㊽ Bennante Vertragsstaaten:
**AT BE CH FR IT LI SE**

(56) Entgegenhaltungen:
**DE-B-1 060 006**
**DE-B-1 177 709**
**DE-U-8 020 040**

(73) Patentinhaber: **Asea Brown Boveri Aktiengesellschaft**
**Kallstadter Strasse 1**
**D-6800 Mannheim-Käfertal (DE)**

(72) Erfinder: **Bracht, Werner**
**Busch-Jäger-Weg 1**
**D-5880 Lüdenscheid (DE)**

(74) Vertreter: **Rupprecht, Klaus, Dipl.-Ing.**
**c/o Asea Brown Boveri Aktiengesellschaft**
**Zentralbereich Patente Postfach 100351**
**D-6800 Mannheim 1 (DE)**

LIBERGRAF, STOCKHOLM 1990

EP 0 091 620 B1

2

**Beschreibung**

Die Erfindung betrifft eine Vorrichtung zum schraublosen Verbinden von zwei Gehäuseteilen eines Installationsgerätes der im Oberbegriff des Anspruches 1 genannten Art.

Installationsgeräte für die Wandmontage bestehen im wesentlichen aus einem Gehäuseunterteil, einem Gehäuseoberteil und einem Geräteeinsatz, der die Art des Installationsgerätes bestimmt. Bei der Montage wird zunächst das Gehäuseunterteil an der Wand befestigt, dann wird der mit den Leitungen zu verbindende Geräteeinsatz in das Gehäuseunterteil eingeschoben und schließlich wird das Gehäuseoberteil auf das Gehäuseunterteil aufgesetzt.

Um ein rationelles Arbeiten zu gewährleisten, muß das Gehäuse bei der Montage schnell zu schließen und zu öffnen sein. Rastvorrichtungen mit Rasthebeln und Rastauflagen erfüllen diese Forderung im allgemeinen wesentlich besser als Schraubvorrichtungen.

Es ist eine Rastvorrichtung bekannt (DE-GM-6 751 595), bei der an den Innenseiten des Randes eines aus elastischem Material bestehenden Gehäuseoberteils, Rastvorsprünge vorgesehen sind. Das Gehäuseoberteil wird kappenartig auf das Gehäuseunterteil gesetzt, wobei die Rastvorsprünge in Rastvertiefungen der Außenwand des Gehäuseunterteils einklinken. Die Rastvorrichtung erfüllt die sicherheitstechnische Forderung, daß zum Öffnen des Gehäuses ein Werkzeug erforderlich sein muß. Nachteilig ist jedoch, daß das Werkzeug von der Seite angesetzt werden muß, was bei ungünstigen Platzverhältnissen oft nicht möglich ist.

Ähnlich liegen die Dinge bei der ersten Ausführungsvariante einer anderen bekannten Rastvorrichtung (DE-GM-7 024 599). Die beschriebene zweite Version dieser Vorrichtung hat zusätzlich noch den Nachteil, daß das Gehäuse erst von der Wand abzuschrauben ist, bevor es von unten geöffnet werden kann.

Bei einer weiteren bekannten Rastvorrichtung (DE-AS-1 690 086) wird der Geräteeinsatz durch Rasthebel im Gehäuseunterteil gehalten. Wie das Gehäuseoberteil mit dem Gehäuseunterteil zu verbinden ist, kann der Druckschrift nicht entnommen werden.

Es ist auch eine Rastvorrichtung bekannt, bei der das Lösen des Gehäuseoberteils mit Hilfe eines Werkzeuges von oben erfolgen kann (DE-GM-8 020 040). Dabei muß das Werkzeug zum Ausklinken der Rastnase in einen Eingriffstrichter eingeführt werden. Der Eingriffstrichter erfordert jedoch viel Platz und muß außerdem vom übrigen Gehäuseinneren getrennt sein, um einen Schutz vor Berührung elektrischer Teile sowie vor eindringendem Wasser sicherzustellen.

Die Entgegenhaltung DE-B-1 177 709 offenbart eine wasserdichte Abzweigdose, bei welcher ein Gehäuse und ein Deckel mittels zusammenwirkender Gehäuse- und Deckelverrastungselemente sowie erforderlichenfalls unter zusätzlicher Zwischenlage einer elastischen Dichtung miteinander verbunden sind. Insbesondere ist hieraus ein zentral am Boden des Gehäuses angeordneter Zapfen bekannt, dessen oberes Ende Einrastzähne aufweist. Der Deckel weist einen ebenfalls zentral angeordneten, auf den Zapfen passenden Deckelstutzen auf, der inwendig mit einer umlaufenden Einrastnut versehen ist. Wird der elastische Deckel durch Druck auf seine Mitte auf das Gehäuse aufgedrückt, biegt er sich durch und verrastet mit den Einrastzähnen in der Einrastnut. Zum Entfernen des Deckels wird vorzugsweise ein Schraubenzieher in einen Zwischenraum zwischen dem Zapfen und einer Innenbohrung des Deckelstutzens eingesetzt. Durch Kippen des Schraubenziehers wird der Einrastzahn, bedingt durch die Elastizität des Werkstoffes, aus der Einrastnut des Deckelstutzens herausgeschoben, so daß der Deckel vom Gehäuse abgenommen werden kann. Nach der Entfernung des Deckels springt der Einrastzahn elastisch in seine Grundstellung zurück.

Bei dieser bekannten Rast- und Entrastvorrichtung ist nachteilig, daß zunächst mittels Werkzeug die Rastvorrichtung gelöst werden muß und daß dann von Hand der Deckel vom Gehäuse abgenommen werden muß. Dies bedingt zwei Arbeitsgänge, die entweder nur zeitlich hintereinander oder unter gleichzeitiger Gebrauchnahme zweier Hände bewerkstelligt werden können. Auch ist die bei der Entrastung aufzuwendende Kraft noch relativ groß, weil die Einrastzähne kurz sind und auch nur unter weitgehender Materialverformung aus der Einrastnut ausgehebelt werden können, da die Zapfen selbst keinen Bewegungsspielraum gegenüber dem Deckelstutzen aufweisen.

Alle bekannten Rastvorrichtungen haben gemeinsam den Nachteil, daß beim Lösen des Gehäuseoberteils zur gleichen Zeit zwei Kräfte ausgeübt werden müssen. Eine Kraft dient zum Ausklinken der Rastnase und die andere Kraft zum Anheben des Gehäuseoberteils, um ein Wiedereinklinken der Rastnase zu verhindern.

Rastvorrichtungen, bei denen das Werkzeug von der Seite angesetzt wird, erlauben im allgemeinen das Lösen einer Rastnase und ein Ausheben des Gehäuseoberteils mit dem selben Werkzeug. Auch beim Lösen der Rastvorrichtung vom Gehäuseboden aus, kann das Gehäuseoberteil im allgemeinen mit dem gleichen Werkzeug nach oben gedrückt werden. Anders liegen die Verhältnisse, wenn die Rastvorrichtung von oben gelöst werden soll. Hier ist es bisher unvermeidlich, mit der Hand das Gehäuseoberteil anzuheben, sobald die Rastnase ausgeklinkt ist. Bei beengten Raumverhältnissen kann eine derartige Zweihandbetätigung zu erheblichen Montageschwierigkeiten führen.

Es ist deshalb Aufgabe der Erfindung, unter Vermeidung obiger Nachteile eine Rast- und Entrastvorrichtung der im Oberbegriff des Anspruchs 1 genannten Art zu schaffen, die es ermöglicht, zwei Gehäuseteile, vorzugsweise eines wasserdicht zu haltenden Installationsgeräts, frontseitig von oben unter Zuhilfenahme nur

2

einer, mit einem Werkzeug ausgerüsteten Hand schnell und einfach zu lösen.

Diese Aufgabe wird durch die in Anspruch 1 gekennzeichneten Merkmale gelöst. Ein großer Vorteil der erfindungsgemäßen Vorrichtung ist, daß das Gehäuseoberteil mit einer Hand vom Gehäuseunterteil entfernt werden kann. Sobald eine Rastnase ausgeklinkt wird, drückt die hochelastische Dichtung die beiden Gehäuseteile auseinander. Zunächst gelangt das Gehäuseoberteil dadurch in eine Kipplage zum Gehäuseunterteil, entzieht sich jedoch nach dem Ausklinken der zweiten oder gegebenenfalls weiterer Rastnasen völlig dem Eingriff der Rastvorrichtung.

Weitere Verbesserungen und Ausgestaltungen der Erfindung sind in den Unteransprüchen gekennzeichnet.

Durch die trichterartige Ausbildung der Rastaufnahmen wird die von der elastischen Dichtung eingeleitete Trennung der beiden Gehäuseteile fortgesetzt. Hierzu trägt auch die der Wandschräge angepaßte Gleitfläche der Rastnase bei. Die durch Federwirkung in ihre Ausgangslage zurückdrängenden Rastnasen drücken das Gehäuseoberteil über ihre Gleitflächen von sich weg.

Zur Abdichtung des Trennungsspaltes zwischen den beiden Gehäuseteilen kann alternativ entweder eine separate Dichtung oder eine den Gehäuseteilen angeformte Dichtung verwendet werden. Eine angeformte Dichtung muß so gestaltet sein, daß der in Anspruch 1 gekennzeichnete große Federweg realisiert wird. Erreicht wird das mit einer Dichtung, die die tragenden Seitenwände des Gehäuseteils nach innen und/oder außen als Dichtungslippe überragt. Mindestens eine Dichtungskante des anderen Gehäuseteils stützt sich dabei auf der Dichtungslippe ab.

Als Spritzgußmaterial für die Gehäuse von Installationsgeräten verwendet man entweder (flexible) Thermoplaste oder nichtflexible, dafür aber kratzfeste Duroplaste. Während bei einem Gehäuse aus Thermoplast die Rastvorrichtung angeformt werden kann, wird sie bei einem Gehäuse aus Duroplast vorzugsweise aus flexiblem Thermoplast oder Metall hergestellt. Ein derartiger Rasthebel ist erfindungsgemäß durch Verschweißen, Nieten, Bördeln, Kleben oder Klemmen am Gehäuse zu befestigen.

Ein guter Zugriff zur Rastvorrichtung wird dadurch erzielt, daß die Rastaufnahmen in einer im Gehäuseoberteil ausgebildeten Abdeckplatte ließen. Um ein unbefugtes Öffnen des Gehäuses zu erschweren ist die von oben ausklinkbare Rastnase von einer Abdeckung umgeben. Die Abdeckung kann nur mit Hilfe eines Werkzeuges überwunden werden. Die Ausgestaltung der Abdeckung hängt von der Art des Installationsgerätes ab. Bei einem Schalter dient die auf das Gehäuseoberteil aufzusteckende Wippe als Abdeckung. Zum Beispiel bei Steckdosen ist vorzugsweise ein die Rastauflage und damit auch die Rastöffnung umschließender Kragen vorgesehen. Zwischen Kragen und Rastnase verbleibt nur ein schmaler Spalt, in den ausschließlich ein Werkzeug einsteckbar ist. Die Montage des Gehäuses wird dadurch erleichtert, daß Rasthebel und Rastaufnahmen jeweils rotationssymmetrisch zueinander angeordnet sind. Bei zwei Rasthebeln ist eine Verdrehung um 180°, bei vier Rasthebeln sogar eine Verdrehung von 90° möglich.

Die Befestigung eines Rasthebels in einem Gehäuse aus Duroplast soll möglichst einfach vonstatten gehen. Hierzu ist am Rasthebel ein Fuß ausgebildet, der auf einen im Gehäuse angeformten Sockel aufgesetzt wird. Ein am Fuß des Rasthebels oder dem Sockel ausgebildeter Zapfen, dient zum Verschweißen und damit unlösbaren Verbinden der beiden Teile. Eine Erleichterung der Montage des Rasthebels wird dadurch erzielt, daß beidseitig der Rastöffnung 5a eine Rastauflage 5b im Gehäuseoberteil vorgesehen ist. Der Rasthebel kann somit auch um 180° verdreht montiert werden.

Die Rastvorrichtung wird weiterhin dadurch verbessert, daß der Rasthebel durch eine Knickstelle vorgespannt ist und die Rastnase gegenüber der Mitte der Rastöffnung versetzt wird. Die an den Rasthebeln angeformten Rastnasen, bei den sich im Gehäuse beidseitig gegenüberliegenden Rasthebeln, weisen in entgegengesetzte Richtung. Dadurch werden die auf das Gehäuseoberteil wirkenden Haltekräfte gleichmäßig auf dieses verteilt. Der zwischen den im Wandbereich des Gehäuseunterteils angeordneten Rastvorrichtungen verbleibende Freiraum dient zum Einbringen des Geräteeinsatzes.

Zur Berücksichtigung von Kundensonderwünschen oder auch zur Verbesserung der Dichtheit gegenüber Wasser, ist neben der Rastvorrichtung eine Schraubvorrichtung zum Verbinden der Gehäuseteile vorgesehen.

Die beiden Gehäuseteile greifen beim Zusammenbau derart ineinander, daß sich ihre Seitenwände gegenseitig überlappen. Hierdurch wird eine voreilende Führung erzielt, die das Verklinken der Rastvorrichtung erleichtert. Daß die Außenflächen der Seitenwände beider Gehäuseteile in einer Ebene liegen, verbessert die ästhetische Wirkung.

Um das Eindringen von Wasser zu verhindern, muß die Dichtung den Trennungsspalt zwischen den Gehäuseteilen gut abdichten. Die in das Gehäuseoberteil eingelegte Dichtung schließt deshalb bündig mit ihrer Außenkante an der Innenkante des Gehäuseoberteils ab.

Ein Ausführungsbeispiel der Erfindung ist in den Zeichnungen dargestellt und wird im folgenden näher beschrieben.

Es zeigen

Fig. 1    das geschlossene Gehäuse eines Installationsschalters mit Blick auf das Gehäuseoberteil bei abgenommener Wippe.

Fig. 2    den in Fig. 1 dargestellten Schnitt A durch einen Sockel im Gehäuseunterteil mit montiertem Rasthebel.

Fig. 3    den in Fig. 1 dargestellten Schnitt B durch Gehäuseunter- und Oberteil mit aufgesteckter Wippe; Dichtung und Rasthebel sind bei dieser Variante angeformt.
Fig. 4 den in Fig. 1 dargestellten Schnitt B entsprechend Fig. 3, jedoch sind bei dieser Variante der Rasthebel und die Dichtung separate Teile.

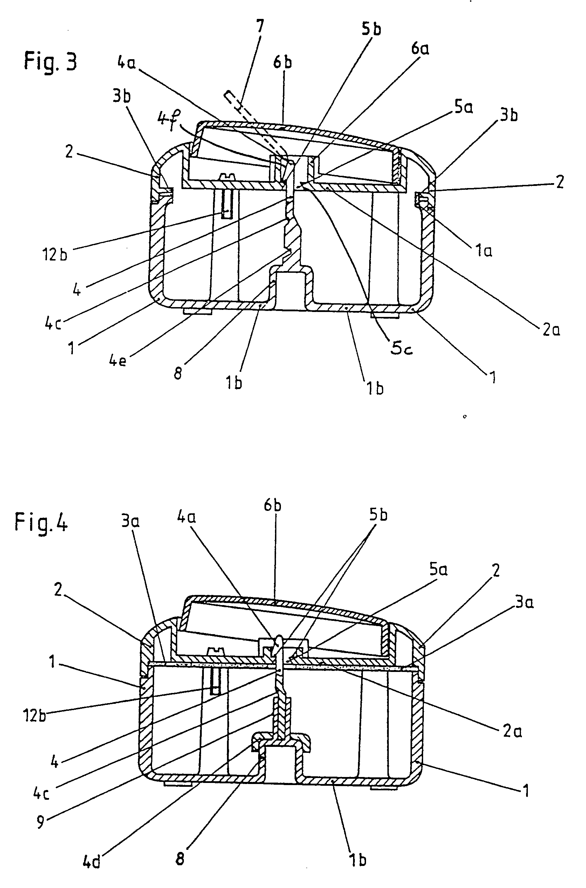

Die Darstellung in Fig. 4 läßt einen Installationsschalter im Schnitt erkennen, der aus einem Gehäuseunterteil 1, einem Gehäuseoberteil 2 und einer die beiden Gehäuseteile verbindenden Rastvorrichtung 4, 5 besteht. Zwischen den Gehäuseteilen ist eine hochelastische Dichtung 3a eingefügt. Diese hat zunächst die Aufgabe, das Gehäuse gegenüber eindringendem Wasser abzudichten. Außerdem gleicht sie Toleranzen des zwischen den Gehäuseteilen liegenden Trennungsspaltes aus und sorgt damit für einen festen Sitz des Gehäuseoberteils. Darüber hinaus hat die Dichtung durch ihre außergewöhnliche Elastizität eine entscheidende Wirkung auf die Rastvorrichtung. Sobald man die Rastvorrichtung ausklinkt, werden die beiden Gehäuseteile infolge der Elastizität der Dichtung auseinandergedrückt.

Auf der Bodenplatte 1b des Gehäuseunterteils 1 ist ein Sockel 8 angeformt, an dem wiederum ein Zapfen 9 ausgebildet ist. Der Zapfen 9 ist mit einer Nut versehen, in die ein Rasthebel 4 eingesetzt ist. Der Rasthebel 4 besitzt außerdem einen kappenartigen Fuß 4d, mit dem er sich auf dem Sockel 8 abstützt. Am Kopf des Rasthebels 4 befindet sich eine Rastnase 4a, die in der Rastaufnahme 5 des Gehäuseoberteils 2 verklinkt ist. Zur Erzeugung einer Vorspannung besitzt der Rasthebel einen Knick 4c, wodurch die Rastnase 4a gegenüber der Mitte des Sockels 8 etwas versetzt ist.

In der Abdeckplatte 2a des Gehäuseoberteils 2 ist die Rastaufnahme 5 ausgebildet. Diese besteht aus einer Rastöffnung 5a und einer Rastauflage 5b. Die in Richtung zur Rastauflage hin trichterförmige Rastöffnung 5a erleichtert das Eindringen des Rasthebels mit der Rastnase. Die Gleitfläche der Rastnase 4a besitzt zudem die gleiche Neigung wie die Wandfläche der trichterartigen Rastöffnung 5a. Hierdurch wird nicht nur ein leichteres Eindringen des Rasthebels in die Rastöffnung erreicht, sondern auch ein leichteres Öffnen des Gehäuses. Nach dem Ausklinken der Rastnase 4a versucht der Rasthebel 4 nämlich durch seine Federkraft wieder in die Ausgangsstellung zurückzugelangen. Unterstützt durch die schiefen Ebenen von Gleitfläche und Rastöffnung, drückt der Rasthebel das Gehäuseoberteil 2 vom Gehäuseunterteil 1 weg. Dadurch unterstützt der Rasthebel nicht nur die trennende Wirkung der Dichtung, sondern setzt sie, sobald deren Federweg der Dichtung erschöpft ist, weiter fort.

Auf das Oberteil 2 ist eine Wippe 6 aufgesteckt, die gleichzeitig als Abdeckung für die Rastvorrichtung dient. Die Wippe 6b läßt sich nur mit Hilfe eines Werkzeuges vom Gehäuseoberteil lösen, so daß ein Öffnen des Gehäuses von Hand nicht möglich ist. Die Rastvorrichtung kann durch eine Schraubverbindung 12 unterstützt werden.

Der in Fig. 3 dargestellte Schalter ist in seinen wesentlichen Teilen so wie in Fig. 4 aufgebaut. Anders ist die Gestaltung der Dichtung, die in diesem Falle als Dichtung 3b dem Gehäuseoberteil angeformt ist. In diesem Falle müssen die Gehäuseteile aus einem flexiblen Thermoplast bestehen, damit die notwendig Federwirkung der Dichtung erzielbar ist. Die Dichtung 3a ist am Innenrand des Gehäuseoberteils 2 als Dichtungslippe angeformt. Beim Zusammenbau der Gehäuseteile wird die Dichtungslippe 3b durch eine Kante 1a des Gehäuseunterteils erfaßt und aus ihrer waagrechten Lage gedrängt. Beim Lösen der Rastvorrichtung federt die Dichtungslippe zurück.

Da es sich bei Fig. 3 um ein thermoplastisches Gehäuse handelt, ist auch der Rasthebel 4 am Sockel 8 angeformt. Eine Sollbruchstelle 4e erlaubt es im Bedarfsfall, den Rasthebel auszubrechen und die Gehäuseteile nur mit Schrauben zu verbinden.

In Fig. 3 ist die Rastauflage 5b des Gehäuseoberteils 2 durch eine kragenartige Abdeckung 6a umgeben. In diesem Falle wird der Kragen 6a so hoch und so dicht um die Rastauflage 5b gelegt, daß die Rastnase nur mit Hilfe eines Werkzeuges zu erreichen ist.

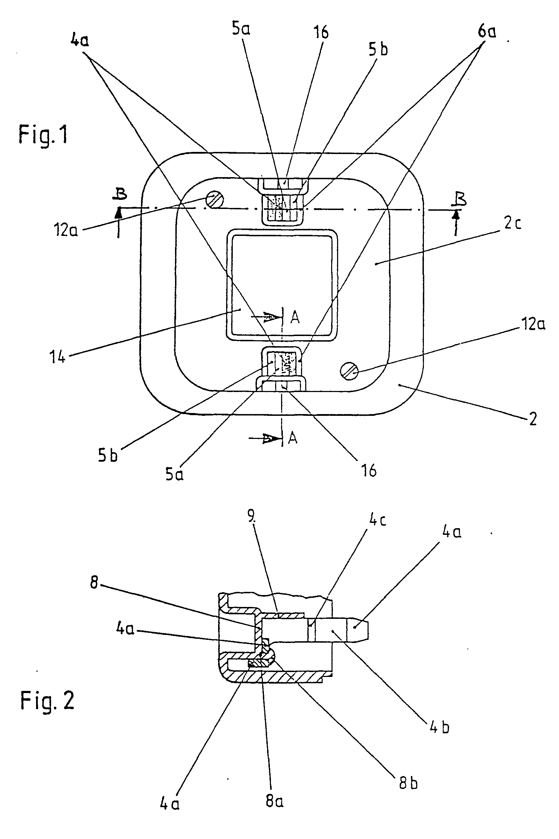

In Fig. 1 wird die Rastauflage 5b sowie die Rastnase 4a von oben sichtbar. Die Rastöffnung 5a ist so bemessen, daß die Rastnasen 4a sie leicht durchdringen können.

Das Gehäuseoberteil 2 in Fig. 1. zeigt eine Öffnung 14, über welche eine Verbindung der Betätigungswippe 6b mit dem Schalter erfolgt. Die Drehpunkte der Wippe 6b des Schalters liegen an den Achsstummeln 16. Diese Achsstummel 16 bilden auch eine Verbindung des Gehäuseoberteils 2 mit der Betätigungswippe 6b. Die Wippe 6b liegt innerhalb einer Versenkung 2c des Gehäuseoberteils 2.

Fig. 2 verdeutlicht noch die Gestaltung des Rasthebels 4. Es wird sichtbar, daß sich die Rastnase 4a auch an den Seiten nach oben verjüngt, um eine leichtere Durchdringung der Rastöffnung 5a zu erreichen.

Der kappenartige Fuß 4d des Rasthebels 4 umfaßt den Sockel 8 nur einseitig. Auf der anderen Seite des Sockels 8 ist ein Zapfen 9 angeformt, in dessen, durch den Schnitt nicht sichtbare Nut, der Rasthebel 4 eingesteckt ist. An dem Sockel 8 ist ein weiterer Zapfen 8a angeformt, der ein Loch im Fuß 4d des Rasthebels 4 durchdringt. Nachdem der Rasthebel 4 auf den Sockel 8 aufgesetzt ist, wird der Zapfen 8a an seinem Ende zu einem Zapfenkopf 8b verschweißt.

Für die Wirkungsweise der Rastvorrichtung 4, 5 ist noch von Bedeutung, daß sich die beiden Gehäuseteile 1, 2 an den Seitenwänden gegenseitig überlappen. Beim Durchdringen der Rastöffnungen 5a üben die Rasthebel 4 eine Kraft auf das Gehäuseoberteil 2 aus, die zu einer Verkantung gegenüber dem Gehäuseunterteil führen würde. Durch die voreilende Führung der sich überlappenden Seitenwände der Gehäuseteile 1, 2 wird eine solche Verkantung vermieden und ein müheloses Verklinken der Gehäuseteile erreicht.

**Patentansprüche**

1. Vorrichtung zum Verrasten und Entrasten von Gehäuseteilen, vorzugsweise eines Installationsgeräts, mit mindestens einem, an einem festen Ende an einem ersten Gehäuseteil (1) angeordneten Rasthebel (4), welcher eine, an einem zweiten Gehäuseteil (2) in der Verlängerung des festen Endes fluchtend zugeordnete Rastöffnung (5a) durchgreift und mittels einer an einem freien Ende des Rasthebels (4) angeformten Rastnase (4a) eine Rastauflage (5b) hintergreift, sowie mit einer in der Teilungsebene der Gehäuseteile (1, 2) vorgesehenen hochelastisch federnden Dichtung (3), dadurch gekennzeichnet, daß zwei auf der Bodenplatte (1b) des ersten Gehäuseteils (1) diametral und beabstandet gegenüberstehende Rasthebel (4) vorgesehen sind, wobei jeder Rasthebel (4) einen die Rastnase (4a) gegenüber seinem festen Ende versetzenden Knick (4c) aufweist und wobei die Rastnasen (4a) in entgegengesetzte Richtung weisen, und daß die Rastöffnungen (5a) in Durchgriffsrichtung der Rasthebel (4) mit sich konisch verjüngenden, trichterförmigen Wandschrägen (5c) versehen sind, wobei die trichterartigen Wandschrägen (5c) der Rastöffnungen (5a) und Gleitflächen (4f) der Rastnasen (4a) als weitgehend parallele Flächen ausgebildet sind, und daß zwischen den sich gegenseitig überlappenden Gehäuseteilen (1, 2) soviel Spiel vorhanden ist, daß die elastische Dichtung (3) das zweite Gehäuseteil (2) gegenüber dem ersten Gehäuseteil (1) in eine Kippstellung bringt, sobald einseitig eine Rastnase (4a) entrastet ist.

2. Vorrichtung nach Anspruch 1, dadurch gekennzeichnet, daß beidseitig der Rastöffnungen (5a) Rastauflagen (5b) sich anschließen

3. Vorrichtung nach Anspruch 1 oder 2, dadurch gekennzeichnet, daß die Dichtung (3) einem aus thermoplastischem Material bestehenden zweiten Gehäuseteil (2) so angeformt ist, daß mindestens eine der beiden aufeinandertreffenden Flächen der beiden Gehäuseteile (1, 2) federnd nachgibt.

4. Vorrichtung nach Anspruch 3, dadurch gekennzeichnet, daß die am zweiten Gehäuseteil (2) angeformte Dichtung (3b) die tragenden Seitenwände des zweiten Gehäuseteils (2) nach innen und/oder außen als Dichtungslippe überragt und mindestens eine Dichtungskante (1a) des ersten Gehäuseteils (1) auf der Dichtungslippe (3b) ruht.

5. Vorrichtung nach einem der vorhergehenden Ansprüche, dadurch gekennzeichnet, daß der federnde Rasthebel (4) an einem aus thermoplastischem Material bestehenden ersten Gehäuseteil (1) angeformt ist.

6. Vorrichtung nach einem der Ansprüche 1 bis 5, dadurch gekennzeichnet, daß der federnde Rasthebel (4) aus flexiblem Kunststoff (z. B. Thermoplast) oder Metall besteht und an einem aus nicht flexiblem Kunststoff (z. B. Duroplast) bestehenden ersten Gehäuseteil (1) durch Verschweißen, Nieten, Bördeln, Kleben oder Klemmen befestigt ist.

7. Vorrichtung nach einem der vorhergehenden Ansprüche, dadurch gekennzeichnet, daß die von oben ausklinkbare Rastnase (4a) von einer Abdeckung (6) umgeben ist und diese so mit dem zweiten Gehäuseteil (2) verbunden ist, daß ein Öffnen des Gehäuses (1,2) das Benutzen eines von oben einzuführenden Werkzeuges bedingt.

**Claims**

1. Device for locking and unlocking housing parts, preferably of an accessory, having at least one latching lever (4), which is arranged at a fixed end on a first housing part (1) and engages through a latching opening (5a) associated in alignment at a second housing part (2) in the prolongation of the fixed end and engages behind a latching rest (5b) by means of a latching nose (4a) integrally formed at a free end of the latching lever (4), and having a highly resilient seal (3) provided in the plane of division of the housing parts (1, 2), characterized in that two latching levers (4) situated diametrically opposite and spaced apart on the base plate (1b) of the first housing part (1) are provided, each latching lever (4) having a kink (4c) which offsets the latching nose (4a) relative to the fixed end of said latching lever, and the latching noses (4a) pointing in the opposite direction, and in that, in the direction of through-engagement of the latching levers (4), the latching openings (5a) are provided with conically tapering, funnel-shaped wall slopes (5c), the funnel-like wall slopes (5c) of the latching openings (5a) and sliding faces (4f) of the latching noses (4a) being designed as substantially parallel faces, and in that there is sufficient play between the mutually overlapping housing parts (1, 2) for the resilient seal (3) to bring the second housing part (2) into a tilted position relative to the first housing part (1) as soon as one latching nose (4a) is disengaged on one side.

2. Device according to Claim 1, characterized in that latching rests (5b) adjoin the latching openings (5a) on both sides.

3. Device according to Claim 1 or 2, characterized in that the seal (3) is integrally formed on a second housing part (2) composed of thermoplastic material in such way at least one of the two meeting faces of the two housing parts (1, 2) yields resiliently.

4. Device according to Claim 3, characterized in that the seal (3b) integrally formed on the second housing part (2) protrudes inwards and/or outwards as a sealing lip beyond the load-bearing side walls of the second housing part (2) and at least one seal edge (1a) of the first housing part (1) rests on the sealing lip (3b).

5. Device according to one of the preceding claims, characterized in that the resilient latching lever (4) is characterized in that the resilient latching lever (4) is integrally formed on a first housing part (1) composed of thermoplastic material.

6. Device according to one of Claims 1 to 5, characterized in that the resilient latching lever (4) is composed of flexible plastic (e.g. thermoplastic) or metal and is fixed on a first housing part (1) composed of inflexible plastic (e.g. thermosetting resin) by welding, riveting, flanging, adhesive bonding or clamping.

7. Device according to one of the preceding claims, characterized in that the latching nose (4a), which can be unlatched from above, is surrounded by a cover (6) and the latter is connected to the second housing part (2) in such a way that opening the housing (1, 2) requires the use of a tool to be introduced from above.

**Revendications**

1. Dispositif pour enclencher et désenclencher des parties de boîtier, de préférence d'un appareil d'installation, comportant au moins un levier à cran (4) disposé sur une extrémité fixe sur une première partie (1) du boîtier, levier qui traverse un orifice de cran (5a) disposé sur une deuxième partie de boîtier (2) et s'alignant dans le prolongement de l'extrémité fixe, et qui saisit par l'arrière un support de cran (5b) au moyen d'un ergot d'arrêt (4a) façonné sur une extrémité libre du levier (4), et comportant également un joint (3) hautement élastique faisant ressort prévu dans le plan de séparation entre les deux parties de boîtier (1, 2), caractérisé par le fait que sur la plaque de base (1b) de la première partie de boîtier (1) sont prévus deux leviers à cran (4) diamétralement opposés et distants l'un de l'autre, chaque levier (4) présentant un coude (4c) qui décale l'ergot (4a) par rapport à son extrémité fixe et les ergots (4a) étant orientés dans des directions opposées, et par le fait que les orifices de cran (5a) présentent, dans la direction de pénétration des leviers (4), des parois obliques (5c) se rétrécissant à la manière d'un cône, en forme d'entonnoir, lesdites parois obliques (5c) en forme d'entonnoir des orifices de cran (5a) et les faces de glissement (4f) des ergots d'arrêt (4a) étant réalisées sous forme de faces pratiquement parallèles, et par le fait qu'entre les parties de boîtier (1, 2) se chevauchant mutuellement, il subsiste un jeu suffisant pour que le joint élastique (3) amène la deuxième partie de boîtier (2) dans une position de basculement par rapport à la première partie de boîtier (1) dès qu'un ergot d'arrêt (4a) est désenclenché d'un côté.

2. Dispositif selon la revendication 1, caractérisé par le fait que des deux côtés des orifices de cran (5a) se raccordent des supports de cran (5b).

3. Dispositif selon la revendication 1 ou 2, caractérisé par le fait que le joint (3) est formé sur une deuxième partie de boîtier (2) constituée d'une matière thermoplastique, de telle sorte qu'au moins l'une des deux faces de contact des deux parties de boîtier (1, 2) plie en faisant ressort.

4. Dispositif selon la revendication 3, caractérisé par le fait que le joint (3b) formé sur la deuxième partie de boîtier (2) dépasse vers l'intérieur et/ou vers l'extérieur, en formant une lèvre d'étanchéité, les parois latérales portantes de la deuxième partie de boîtier (2) et qu'au moins une arête d'étanchéité (1a) de la première partie de boîtier (1) repose sur ladite lèvre d'étanchéité (3b).

5. Dispositif selon l'une des revendications précédentes, caractérisé par le fait que le levier à cran (4) élastique est formé sur une première partie de boîtier (1) constituée en matière thermoplastique.

6. Dispositif selon l'une des revendications 1 à 5, caractérisé par le fait que le levier à cran élastique (4) est constitué en une matière plastique (par exemple un thermoplastique) ou un métal flexible et qu'il est fixé sur une première partie de boîtier (1) en matière plastique non flexible (par exemple un thermodurcissable) par soudage, rivetage, sertissage, collage ou serrage.

7. Dispositif selon l'une des revendications précédentes, caractérisé par le fait que l'ergot d'arrêt (4a) pouvant être désenclenché par le haut est entouré d'un couvercle (6) et que ce couvercle est relié à la deuxième partie de boîtier (2) de telle sorte que toute ouverture du boîtier (1, 2) implique obligatoirement l'utilisation d'un outil insérable par le haut.

Fig.1

Fig. 2

Fig. 3

Fig. 4